Europäisches Patentamt

European Patent Office

Office européen des brevets

(19)

(11) Veröffentlichungsnummer: **0 585 484 A1**

## (12) EUROPÄISCHE PATENTANMELDUNG

(21) Anmeldenummer: **92114985.2**

(51) Int. Cl.5: **G01L 25/00**

(22) Anmeldetag: **02.09.92**

(43) Veröffentlichungstag der Anmeldung:
**09.03.94 Patentblatt 94/10**

(84) Benannte Vertragsstaaten:
**AT BE CH DE DK ES FR GB GR IE IT LI LU MC NL PT SE**

(71) Anmelder: **A. M. Erichsen GmbH**
**Simonshöfchen 31**
**D-42327 Wuppertal(DE)**

(72) Erfinder: **Havemann, Therese**
**Sonnenacker 48**
**W-4000 Düsseldorf 31(DE)**

(74) Vertreter: **Peerbooms, Rudolf, Dipl.-Phys.**
**Postfach 20 14 17**
**D-42214 Wuppertal (DE)**

(54) **Belastungsmaschine mit hydraulischer Kraftübersetzung.**

(57) Eine Belastungsmaschine mit hydraulischer Kraftübersetzung zur Kalibrierung von Kraftaufnehmern (7) besitzt einen in einem Arbeitszylinder (6) aufgenommenen Arbeitskolben (5), der mit einem Arbeitsdruck (pA) beaufschlagt wird, welcher von einem an einer hydraulischen Meßseite (16) jeweils vorgegebenen Meßdruck (pM) abhängig ist, wobei im Arbeitszylinder (6) auftretende Lecköl verluste über eine geregelte Ölzufuhr (8) ausgeglichen werden.

Um die Anzahl der vorzugebenden Meßdrücke zu reduzieren und der Gefahr einer Schwingung im zylindrischen System vorzubeugen ist vorgesehen, daß die Meßseite (16) und der Arbeitszylinder (6) während der Kalibrierung hydraulisch voneinander entkoppelt sind, daß die Druckdifferenz ($\Delta$p)zwischen Meßdruck (pM) und Arbeitsdruck (pA) mittels eines Differenzdruckgebers (27) ermittelt wird und daß der Differenzdruckgeber (27) über ein dem Arbeitszylinder (6) gesondert zugeordnetes Stellglied (19) den Arbeitsdruck (pA) auf Einhaltung eines vorgegebenen Soll-Differenzdruckes ($\Delta p_i$) regelt.

*Fig. 2*

EP 0 585 484 A1

Die Erfindung betrifft eine Belastungsmaschine mit hydraulischer Kraftübersetzung zur Kalibrierung von Kraftaufnehmern, bei welcher ein in einem Arbeitszylinder aufgenommener Arbeitskolben mit einem Arbeitsdruck beaufschlagt wird, der von einem an einer hydraulischen Meßseite jeweils vorgegebenen Meßdruck abhängig ist, wobei im Arbeitszylinder auftretende Lecköverluste über eine geregelte Ölzufuhr ausgeglichen werden.

Eine derartige Belastungsmaschine ist durch die EP 403677 A1 bekannt. Dort weist die Meßseite einen von einem Meßzylinder aufgenommenen Meßkolben auf, der durch Belastungsgewichte in diskreten Belastungsstufen belastbar ist. Der Meßzylinder und der Arbeitszylinder sind dort ständig über eine hydraulische Verbindungsleitung miteinander gekoppelt, so daß der Druck im Arbeitszylinder immer gleich dem Druck im Meßzylinder ist und also eine unmittelbare Abhängigkeit des Arbeitsdruckes vom jeweils gewählten Meßdruck gegeben ist.

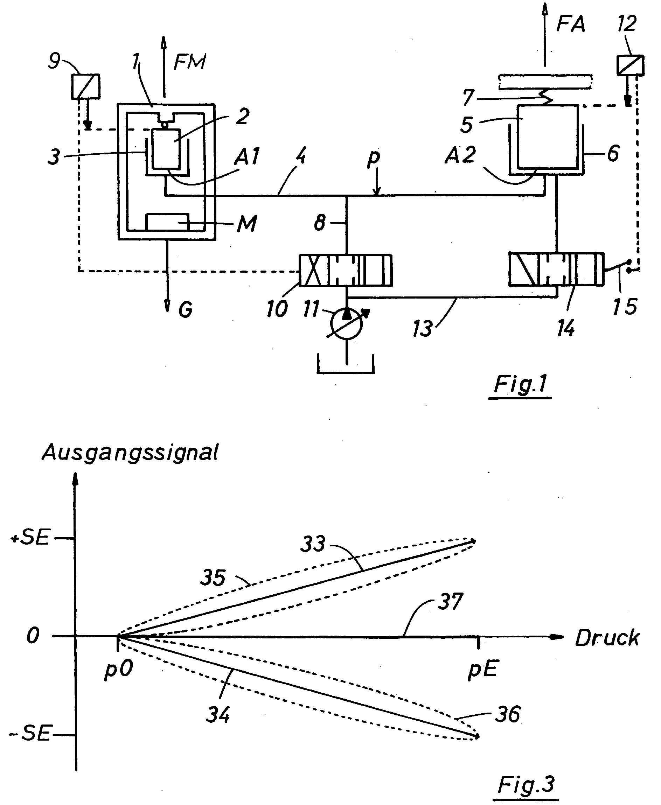

Das Prinzip der bekannten Belastungsmaschine mit hydraulischer Kraftübersetzung basiert auf der Kraftübersetzung mit Hilfe von zwei Kolben-Zylindersystemen unterschiedlicher Arbeitsflächen und wird im folgenden anhand von Fig. 1 näher erläutert. Die Gewichtskraft G eines Belastungsgewichtes M und eines meist verwendeten Umkehrgehänges 1 wirkt auf einen Meßkolben 2 mit Arbeitsfläche A1, wodurch innerhalb des Meßzylinders 3 ein Druck p erzeugt wird, dessen hydraulische Gegenkraft FM im Gleichgewicht mit der Gewichtskraft G steht. Der Druck p wirkt gleichzeitig über eine Verbindungsleitung 4 auf die Arbeitsfläche A2 eines Arbeitskolbens 5 im Arbeitszylinder 6 und erzeugt dort eine zweite hydraulische Kraft FA, die auf einen zu kalibrierenden Kraftaufnehmer 7 wirkt und die dem Übersetzungsverhältnis der beiden wirksamen Flächen A2/A1, multipliziert mit der Gewichtskraft G, entspricht.

Um Reibungseinflüsse klein zu halten, sind beide Kolben-Zylindersysteme ungedichtet; außerdem rotieren Kolben und Zylinder gegeneinander. Hierdurch geht ständig Lecköl verloren, das kontinuierlich über eine geregelte Leckölzufuhr 8 ersetzt werden muß. Dies ist der schwierigste und aufwendigste Teil solcher Belastungsmaschinen. Wird zu viel Öl nachgefördert, steigt der Meßkolben 2 im Meßzylinder 3 und stört durch seine Bewegung dort das Gleichgewicht. Der Arbeitskolben 5 kann nicht steigen, da er gegen den Kraftaufnehmer 7 arbeitet. Bei zu großer Förderung kann der Druck p steigen und damit die Kraft FA verfälschen. Wird zu wenig Öl nachgefördert, sinkt der Meßkolben 2 der Meßseite und stört ebenfalls das Gleichgewicht. Nimmt die Förderung zu stark ab, dann sinkt der Druck p, und die Kraft FA wird ebenfalls verfälscht. Entscheidend für die Regelung der Leckölzufuhr ist daher die Stellung des Meßkolbens 2 im Meßzylinder 3.

Hierzu wird die Stellung des Meßkolbens 2 mittels eines Wegaufnehmers 9 erfaßt, der über ein in der Ölzufuhr 8 liegendes Stellglied 10 die Nachförderung von Drucköl zum Zylinder 3 auf konstante Einhaltung einer Grundstellung regelt, wobei zugleich über die Ölzufuhr 8 Drucköl zum Arbeitszylinder 6 geleitet wird. Der Vordruck für die Ölzufuhr 8 wird von einer Druckquelle 11 geliefert.

Bei den bekannten Belastungsmaschinen wird ferner zu Beginn der Kalibrierung der Arbeitskolben 5 in eine konstante Nullstellung gebracht, in der der Arbeitskolben 5 vom Boden abgehoben ist, aber gerade noch keine Kraft auf den Kraftaufnehmer 7 ausübt. Diese Voreinstellung kann ebenfalls über einen Wegaufnehmer 12 erfolgen, welcher ein in einer weiteren Ölzufuhrleitung 13 liegendes Stellglied 14 entsprechend steuert. Nach einer solchen Voreinstellung wird diese Regelung abgeschaltet, was der in offener Stellung gezeigte Schalter 15 hier andeutet. Nach dieser Abschaltung wird der Druck im Arbeitszylinder 6 über die Verbindungsleitung 4 aufrecht erhalten und ist damit im gewissen Maß abhängig von der Stellungsregelung des Meßkolbens 2 über den Wegaufnehmer 9 und das Stellglied 10. Da die Leckölverluste beim Meßzylinder 3 und Arbeitszylinder 6 unterschiedlich sind, treten bei der beschriebenen, unmittelbaren hydraulischen Kopplung über die Verbindungsleitung 4 unvermeidbare Fehler in der Kraftübersetzung auf. Durch die ständige Leckölnachförderung stellt sich kein exakt stabiles hydraulisches Gleichgewicht ein, was zu Schwingungen des gesamten hydraulischen Systems führen kann. Außerdem regt auch jede kleinste Bewegung der Belastungsgewichte M das System zu Schwingungen an. Da die Belastungsmaschinen eine Vielzahl von Kraftstufen realisieren müssen, ist der erforderliche Zeitaufwand groß, denn es kann nur in Zeitabständen von einigen Minuten ein Wechsel der Belastungskörper stattfinden. Durch diese Bewegungen wird das Regelsystem extrem gefordert, denn am Kraftaufnehmer 7 dürfen keine Störungen auftreten.

Ein weiterer Nachteil der bekannten Belastungsmaschinen mit hydraulischer Kraftübersetzung besteht darin, daß auf der Meßseite für jede Kraftstufe ein gesondertes Belastungsgewicht erforderlich ist. Da aber in der Praxis in den meisten Fällen die Meßseite gleichzeitig als Belastungsmaschine mit Direktbelastung ausgebildet ist, vergl. die erwähnte EP 403 677 A1, ergeben sich häufig Probleme bei der Auswahl der Belastungsgewichte. Einerseits müssen die Belastungsgewichte die Kraftstufen für die Direktbelastungsmaschine und andererseits auch die Kraftstufen realisieren, die für einen Betrieb mit hydraulischer Übersetzung notwendig sind. Abhängig von den unterschiedlichen Nennbereichen beider Anlagen kann dies zu einer sehr großen Anzahl von erforderlichen Belastungsgewichten führen. Hierdurch werden Mechanik und Regelung komplizierter und die Kosten höher.

Ein weiterer Nachteil der Belastungsmaschinen mit hydraulischer Kraftübersetzung sind die langen Zeitabläufe. Bei Änderung einer Kraftstufe müssen erst die Belastungsgewichte gewechselt und danach ein hydraulisches Gleichgewicht eingestellt werden. Aufgrund der Schwingungsgefahr können diese Vorgänge nur sehr langsam erfolgen. Der Wechsel einer Kraftstufe dauert daher in der Regel zwischen 30 Sekunden und 100 Sekunden, und kürzere Zeiten sind kaum möglich. Trotz der geschilderten Nachteile werden die Belastungsmaschinen mit direkter hydraulischer Übersetzung in der Praxis umfangreich verwendet, da sie zwei entscheidende Vorteile aufweisen. Man kann mit ihnen sehr große Kräfte herstellen, wenn man eine große Fläche des Kolben-Zylindersystems der Arbeitsseite und ein großes Übersetzungsverhältnis wählt. Außerdem ist es möglich, die Kräfte mit sehr kleinen Meßunsicherheiten zu erzeugen. Wenn man die genannten Regelungsprobleme vernachlässigt, erbringen solche Belastungsmaschinen mit hydraulischer Übersetzung, - abgesehen von der reinen Krafterzeugung mit Direktbelastung -, die genauesten Werte, da diese, - einmal berechnet und auf die Basiseinheiten zurückgeführt -, keinen Änderungen oder äußeren Einflüssen unterworfen sind. Änderungen des Übersetzungsverhältnisses durch mechanischen Abrieb der Kolben-Zylinderflächen seien hierbei vernachlässigt, da sie nur sehr langfristig und ohne großen Einfluß auf die Meßsicherheit erfolgen. Belastungsmaschinen mit direkter hydraulischer Übersetzung werden dazu vorwiegend zur hochgenauen Krafterzeugung speziell für große Kräfte, z. B. einer Nennkraft von einem MegaNewton, eingesetzt.

Der Erfindung liegt die Aufgabe zugrunde, eine Belastungsmaschine mit hydraulischer Kraftübersetzung zu schaffen, mit der hochgenau eine größere Anzahl von Kraftstufen, als Belastungsgewichte auf der Meßseite vorhanden sind, erzeugbar ist, bei der die Gefahr einer Schwingung im hydraulischen System reduziert ist und bei der schnelle Wechsel zwischen Kraftstufen möglich sind.

Ausgehend von einer Belastungsmaschine der eingangs genannten Art, ist die Lösung dieser Aufgabe erfindungsgemäß dadurch erreicht, daß die Meßseite und der Arbeitszylinder während der Kalibrierung hydraulisch voneinander entkoppelt sind, daß die Druckdifferenz zwischen Meßdruck und Arbeitsdruck mittels eines Differenzdruckgebers ermittelt wird und daß der Differenzdruckgeber über ein dem Arbeitszylinder gesondert zugeordnetes Stellglied den Arbeitsdruck auf Einhaltung eines vorgegebenen Soll-Differenzdruckes regelt.

Durch die Erfindung werden eine Reihe von Vorteilen erreicht. Zum einen ist durch die während der Kalibrierung vorgesehene Entkopplung der Meßseite und des Arbeitszylinders die Gefahr einer Schwingung des hydraulischen Systems weitestgehend behoben. Zum anderen können durch Wahl verschiedener Soll-Differenzdrücke unterschiedliche Kraftstufen auf der Arbeitsseite realisiert werden, ohne daß hierfür eine Änderung des Meßdruckes auf der Meßseite erforderlich ist. Wird ein Soll-Differenzdruck gleich Null gewählt, ist der Arbeitsdruck gleich dem Meßdruck, und damit ist die auf der Arbeitsseite erzeugte Kraft um das Verhältnis der Kolbenstirnflächen größer als die Kraft auf der Meßseite. Werden dagegen Soll-Differenzdrücke größer als Null vorgegeben, werden auf der Arbeitsseite entsprechend größere Kräfte auf den Kraftaufnehmer ausgeübt. Da die Erzeugung dieser weiteren Kraftstufen ohne Änderung der Belastung auf der Meßseite erfolgt, sind für die Meßseite nur verhältnismäßig wenige Meßdruckstufen, d. h. nur verhältnismäßig wenige Belastungsgewichte, erforderlich. Ferner können solche Kraftstufenwechsel sehr rasch vorgenommen werden, da für einen Wechsel zwischen diesen Kraftstufen nur eine Änderung des Soll-Differenzdruckes für den Differenzdruckgeber erforderlich ist.

Gemäß einer bevorzugten Ausführungsform der Erfindung kann vorgesehen werden, daß die Meßseite einen von einem Meßzylinder aufgenommenen Meßkolben aufweist, der durch Belastungsgewichte belastbar ist und der über ein in der Ölzufuhr liegendes, dem Meßzylinder gesondert zugeordnetes Stellglied mit einem die Belastung des Meßkolbens kompensierenden Druck beaufschlagt wird derart, daß der Meßkolben eine bestimmte Grundstellung im Meßzylinder einnimmt, wobei die Grundstellung des Meßkolbens durch einen sein Stellglied steuernden Wegaufnehmer geregelt wird. Bei dieser Ausführungsform kann die Meßseite zugleich als Direktbelastungsmaschine ausgebildet sein. Da die Stellung des Meßzylinders hier über ein ihm gesondert zugeordnetes Stellglied erfolgt, wirkt dieses Stellglied nicht mehr gleichzeitig auf den Arbeitszylinder. Bei der Erfindung erfolgt damit die Leckölzufuhr zum Meßzylinder und zum Arbeitszylinder über jeweils gesonderte Stellglieder, die von unterschiedlichen Gebern gesteuert werden, wodurch der Gefahr einer Schwingung vorgebeugt ist. Durch diese Entkopplung kann zudem der Druck im Arbeitszylinder mit höchster Genauigkeit geregelt werden.

Nach weiteren Merkmalen der Erfindung kann vorgesehen werden, daß die Nullstellung des Arbeitskolbens im Arbeitszylinder durch einen sein Stellglied steuernden Wegaufnehmer geregelt wird und daß zugleich das Stellglied von einer Regelung durch seinen Wegaufnehmer auf eine Regelung durch den Differenzdruckgeber umschaltbar ist. Eine Regelung durch den Wegaufnehmer wird nur bei der vorbereitenden Nulleinstellung des Arbeitszylinders und bei der Tarierung und Kalibrierung des Differenzdruckgebers vorgesehen, während bei der Kalibrierung des Kraftaufnehmers die Regelung durch den Differenzdruckgebers erfolgt.

Gemäß der bevorzugten Ausführungsform der Erfindung kann vorgesehen werden, daß der Meßzylinder und der Arbeitszylinder über eine Verbindungsleitung hydraulisch miteinander koppelbar sind, daß in der Verbindungsleitung drei jeweils für sich betätigbare Absperrorgane hintereinander angeordnet sind und daß die beiden Druckeingänge des Differenzdruckgebers beidseits des mittleren Absperrorgans an die Verbindungsleitung angeschlossen sind. Durch diese Maßnahmen ist es möglich, entweder den einen Druckeingang des Differenzdruckgebers an den Meßdruck und den anderen an den Arbeitsdruck anzuschließen oder beide Druckeingänge des Differenzdruckgebers entweder gleichzeitig an den Meßdruck oder gleichzeitig an den Arbeitsdruck anzuschließen. Hierdurch sind eine sehr genaue Tarierung der Belastungsmaschine und eine sehr genaue Kalibrierung des Differenzdruckgebers ermöglicht.

Der Erfindung zufolge sollte der Differenzdruckgeber zwei möglichst identische Druckaufnehmer aufweisen, die entweder unmittelbar in Differenzschaltung angeordnet sind oder aus deren Ausgangssignal erst nachfolgend ein Differenzsignal gebildet wird. Vorteilhafterweise handelt es sich bei diesen Druckaufnehmern um mit Dehnungsmeßstreifen-Brücken versehen DMS-Druckaufnehmer. Die DMS-Brücken können in direkter Differenzschaltung betrieben werden, wobei ihr elektrisches Ausgangssignal einem Verstärker zugeführt wird, der elektrische Steuersignale für das Stellglied erzeugt.

Alternativ können die Ausgangssignale der DMS-Brücken jeweils für sich einer Verstärkerstufe zugeführt werden, aus deren Ausgangssignalen ein elektrisches Differenzsignal gebildet wird, welches einem weiteren Verstärker zugeführt wird, der die elektrischen Steuersignale für das Stellglied erzeugt. Dazu können die Ausgangssignale z.B. unmittelbar an die Eingänge eines Differenzverstärkers geführt werden, dessen Ausgangssignal einem Leistungsverstärker zugeführt wird.

Der Erfindung zufolge kann alternativ für die Meßseite eine übliche Druckwaage verwendet werden.

Weitere Merkmale der Erfindung sind in den Unteransprüchen angegeben.

Die Erfindung wird im folgenden anhand der Fig. 1 bis 4 der Zeichnung näher erläutert, wobei zeigen :

Fig. 1 den Hydraulikplan einer bekannten Belastungsmaschine mit hydraulischer Kraftübersetzung,

Fig. 2 eine Belastungsmaschine nach der Erfindung, dargestellt durch ihren Hydraulikplan,

Fig.2a bis 2d vier verschiedene Anschlußstellungen für den Differenzdruckgeber der Belastungsmaschine,

Fig. 3 die Kennlinien von zwei in Differenzschaltung angeordneten Druckaufnehmern des Differenzdruckgebers und

Fig. 4 ein Diagramm zur Erläuterung der Funktionsweise der Belastungsmaschine, wobei

Fig.4a eine Kurve für die Vorgabe von Soll-Differenzdruckwerten bei verschiedenen Arbeitsfunktionen,

Fig.4b eine Kurve für den Meßdruck PM in Abhängigkeit von Gewichtskräften auf der Meßseite und

Fig.4c eine Kurve für die Beziehung zwischen Arbeitsdruck PA und der Kraft FA auf der Arbeitsseite zeigen.

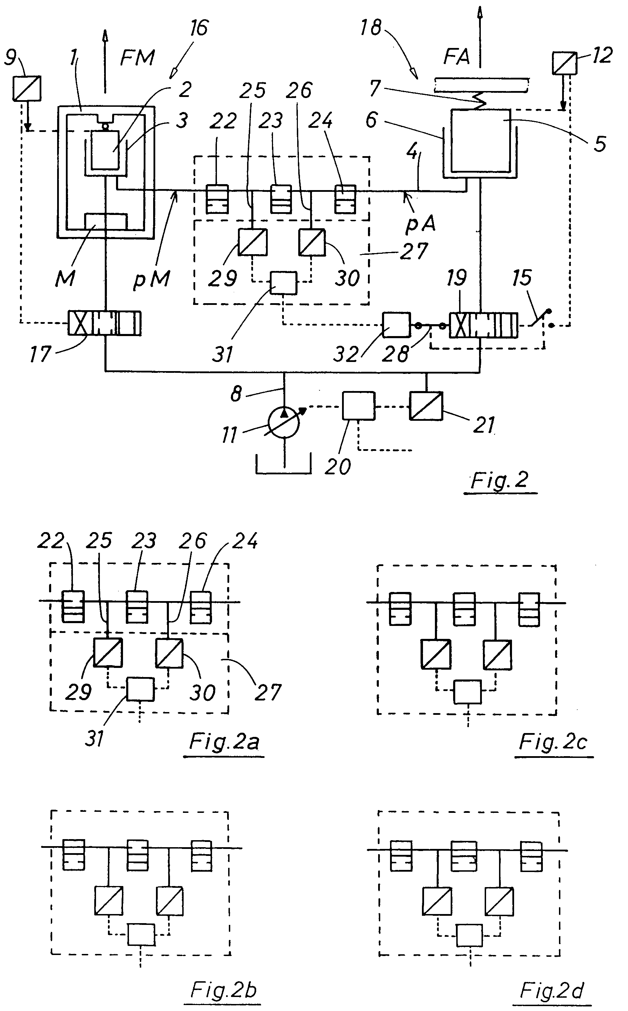

Die Belastungsmaschine nach Fig. 2 umfaßt eine Meßseite 16 mit Umkehrgehänge 1, Meßkolben 2, Meßzylinder 3, Belastungsgewicht M und Wegaufnehmer 9. Der Wegaufnehmer 9 wirkt hier über ein Stellglied 17, das nur dem Meßzylinder 3 zugeordnet ist, auf den Druck pM im Meßzylinder 3 ein. Die Arbeitsseite 18 umfaßt einen Arbeitskolben 5, einen Arbeitszylinder 6, einen Kraftaufnehmer 7 und einen Wegaufnehmer 12, der über ein Stellglied 19 auf den Druck pA im Arbeitszylinder 6 einwirkt. Die beiden Stellglieder 17, 19 sind über eine gemeinsame Leckölzufuhr 8 an eine Druckquelle 11 angeschlossen. Hier ist eine geregelte Axialkolbenpumpe mit zugehörigem Druckaufnehmer 20 und Regler 21 vorgesehen, so daß der Vordruck für die Ölzufuhr den vorzusehenden Belastungsstufen angepaßt werden kann. Anstelle einer solchen geregelten Axialpumpe kann, wenn keine hohe Genauigkeit verlangt wird, auch eine Radialkolbenpumpe verwendet werden.

Übereinstimmend mit der bekannten Belastungsmaschine nach Fig. 1 wird auch hier die Grundstellung des Meßkolbens 2 im Meßzylinder 3 mittels des Wegaufnehmers 9 und des Stellgliedes 17 geregelt und wird mittels Belastungsgewichten M die Meßdruckstufe gewählt. Ebenso wird über den Wegaufnehmer 12 zunächst der Arbeitskolben 5 in seine Nullstellung gebracht. Während der Kalibrierung des Kraftaufnehmers 7 ist diese Wegregelung unterbrochen, was wiederum durch den geöffnet gezeigten Schalter 15 angedeutet ist.

Als entscheidender Unterschied gegenüber dem Stand der Technik sind bei der Belastungsmaschine nach der Erfindung in die Verbindungsleitung 4 zwischen Meßzylinder 3 und Arbeitszylinder 6 drei Absperrorgane 22, 23, 24 hintereinander angeordnet und ist ein mit seinen beiden Eingängen 25, 26 beidseits des mittleren Absperrorganes 23 an die Verbindungsleitung 4 angeschlossener Differenzdruckgeber 27 vorgesehen, dem ebenfalls das Stellglied 19 zugeordnet ist. Dieses Stellglied 19 wird alternativ durch den Wegaufnehmer 12 oder durch den Differenzdruckgeber 27 angesteuert, wie durch den Umschalter 15/28 angedeutet ist. Der Differenzdruckgeber 27 umfaßt zwei Druckaufnehmer 29, 30, bei denen es sich um mit Dehnungsmeßstreifenbrücken versehene DMS-Druckaufnehmer handelt. Diese sind hier in unmittelbarer Differenzschaltung angeordnet, so daß im Schaltpunkt 31 ihr Differenzsignal anfällt, das einem elektrischen Leistungsverstärker 32 zugeführt wird, welcher die Steuersignale für das Stellglied 19 liefert.

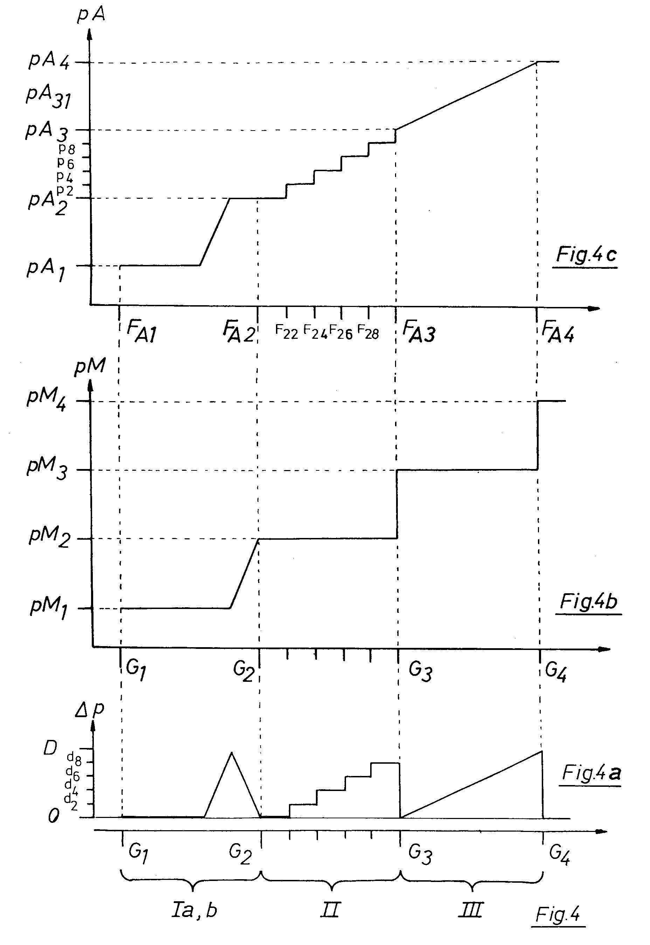

Fig. 3 veranschaulicht die Idealkennlinien 33, 34 der beiden Druckaufnehmer 29, 30 und ihre tatsächlichen, hysteresebehafteten Kennlinien 35, 36. Da die Polung der Druckaufnehmer hier entgegengesetzt gewählt wurde, zeigen die Kennlinien, bzw. die Ausgangssignale der Druckaufnehmer 29, 30 bei gleichem Druck entgegengesetzte Vorzeichen. Werden Druckaufnehmer mit gleicher Hysterese, Empfindlichkeit und Kriechverhalten ausgewählt, beträgt bei gleichen Druckverläufen die Differenz der Ausgangssignale immer Null, d. h. in der Praxis, es liegt immer das Druckdifferenzsignal 37 gleich Null vor.

Geringfügige Abweichungen in der Empfindlichkeit oder im Nullpunktsignal der Druckaufnehmer 29, 30 werden durch elektrische Widerstände oder bei Differenzschaltung über Verstärker durch Empfindlichkeitsänderungen eines Verstärkers korrigiert. Normalerweise geben z. B. zwei in Differenzschaltung verschaltete Druckaufnehmer 29, 30 bei Nenndruck ein Signal von 1 Millivolt/V ab, das mit empfindlichen Verstärkern oder Kompensatoren auf $10^6$ Teile aufgelöst werden kann. Die Druckaufnehmer 29, 30 werden dazu so ausgewählt, daß sie bei Nennkraft ihren Nenndruck haben. Der kleinste Kraftbereich einer Belastungsmaschine sollte 10 % der Nennkraft nicht unterschreiten, d. h. die kleinste Kraftstufe beträgt 1% bis 2 % der Nennkraft. Dies entspricht für das entsprechende Differenzdrucksignal immer noch einer Auflösung von 20.000 Teilen, bzw. einer relativen Signalauflösung von kleiner als $5*10^{-5}$. Für größere Kraftstufen werden die Signale noch wesentlich günstiger.

Im folgenden wird die Arbeitsweise der Belastungsmaschinen näher erläutert.

Zunächst müssen die Nullpunktseinstellungen beider Druckaufnehmer 29, 30 abgeglichen, die Meßseite 16 und die Arbeitsseite 18 tariert, die Empfindlichkeiten beider Druckaufnehmer 29, 30 abgeglichen und das von diesen gelieferte Differenzdrucksignal Δp kalibriert werden. Hierzu wird auf der Arbeitsseite 16 ein hydraulischer Druck über das z.B. als Servoventil ausgebildete Stellglied 19 aufgebracht, so daß der Arbeitskolben 5 der Arbeitsseite 18 frei schwimmt. Das bedeutet, daß das Eigengewicht des Arbeitskolbens 5 inkl. Gewicht des später zu belastenden Kraftaufnehmers 7 mit der durch diesen hydraulischen Druck hervorgerufenen Kraft im Gleichgewicht sind. Überwacht und geregelt wird dies über den Wegaufnehmer 12. Hierbei nehmen die Absperrorgane 22, 23, 24, z.B. Schaltventile, die Stellung nach Fig. 2a ein. Beide Druckaufnehmer 29, 30 liegen über die allein durchgeschalteten Absperrorgane 23, 24 am gleichen arbeitsseitigen Druck von nahezu Null an, der dem Eigengewicht des Kraftaufnehmers 7 und des Arbeitskolbens 5 entspricht. Da auf den Kraftaufnehmer 7 noch keine Kraft ausgeübt wird, wird von der wirksamen Kraft "Null" gesprochen. Bei gleichem Nullpunktssignal beider Druckaufnehmer 29, 30 muß das Differenzdrucksignal Null sein. Falls nicht, muß dieses Nullpunktssignal elektrisch auf Null korrigiert werden.

Anschließend werden die Absperrorgane 22, 23, 24 in die Stellung nach Fig. 2b gebracht, in der das mittlere Absperrorgan 23 gesperrt ist und der Druckaufnehmer 29 an den Meßzylinder 3 und der Druckaufnehmer 30 an den Arbeitszylinder 6 angeschlossen ist. Der Meßkolben 2 wird hydraulisch über das z.B. als Servoventil ausgebildete Stellglied 17 so aufgeschwommen, daß das Eigengewicht von Meßkolben 2 inkl. Belastungsrahmen bzw. Umkehrgehänge 1 im Gleichgewicht mit der Druckkraft im Meßzylinder 3 ist, in dem dann der Meßkolben 2 frei schwimmt. Geregelt wird das Stellglied 17 mit Hilfe des Wegaufnehmers 9. Der Differenzdruckgeber zeigt nun eine Taradruckdifferenz zwischen Meß- und Arbeitsseite an. Durch Belastung des Meßkolbens 2 mit entsprechend kleinen Gewichten wird der Differenzdruck auf Null gebracht. Auf beiden Seiten herrscht danach der gleiche Druck, der einer Kraft auf der Arbeitsseite von "Null" entspricht. Meß- und Arbeitsseite sind damit tariert.

Zur Kalibrierung der beiden Druckaufnehmer 29,30 auf gleiche Empfindlichkeit, werden die Absperrorgane 22, 23, 24 in die Stellung nach Fig. 2c gebracht, in der nur die Absperrorgane 22, 23 durchgeschaltet sind. Durch Auflegen von Belastungsgewichten M wird auf der Meßseite 16 ein Druck erzeugt, der dem berechneten Druck entspricht, der zum genauen Erzeugen der Nennkraft auf der Arbeitsseite 18 notwendig ist. Da beide Druckaufnehmer 29, 30 in der Stellung nach Fig. 2c am gleichen Druck anliegen, muß das Differenzdrucksignal immer noch den Wert Null aufweisen. Eventuelle geringfügige Abweichungen in der Anzeige, hervorgerufen z.B. durch unterschiedliche Empfindlichkeiten der beiden Druckaufnehmer 29, 30, werden elektrisch korrigiert.

Anschließend werden die Absperrorgane 22, 23, 24 wieder in die Stellung nach Fig. 2b gebracht, um die Empfindlichkeit des Differenzdruckgebers festzustellen und sein Differenzdrucksignal Δp zu kalibrieren.

Da die Arbeitsseite 18 immer noch unter Kraft "Null" über den Wegaufnehmer 12 und das Stellglied 19 geregelt wird, zeigt der Differenzdruckgeber 27 einen der Nennkraft entsprechenden Wert $\Delta p$ an. Danach wird die Steuerung des Stellgliedes 19 auf eine Regelung durch den Differenzdruckgeber 27 umgeschaltet, was der Umschalter 15/28 andeutet.

Da der Kennlinienverlauf des Differenzdruckgebers 27 über den gesamten Nennbereich in erster Näherung linear verläuft, vgl. die Kennlinien nach Fig. 3, könnte für nicht sehr genaue Messungen der Differenzdruckgeber 27 über das Stellglied 19 nun direkt zur Steuerung der Kraft für beliebige Kraftstufen zwischen Null und Nennkraft auf der Arbeitsseite 18 herangezogen werden. Je größer jedoch die Druckunterschiede auf beiden Seiten sind, desto unterschiedlicher ist das sich dann nicht mehr eliminierende Kriechverhalten und desto stärker wirken sich Linearitätsabweichungen aus. Für genaue Messungen dürfen die Druckunterschiede daher nicht zu groß werden.

Mit Hilfe der nun in die Stellung nach Fig. 2b gebrachten und den Differenzdruckgeber 27 enthaltenden Regelungsanordnung, die nachfolgend "Differenzdruck-Kompensationskupplung" genannt wird, kann die Belastungsmaschine in folgenden Funktionen betrieben werden:

Funktion I a (Fig. 4)

Auf der Meßseite 16 sind die Belastungsgewichte $M_i$ vorhanden, die zum Erzeugen der gewünschten Kräfte $FA_i$ auf der Arbeitsseite 18 notwendig sind. Ausgangspunkt in Fig. 4 ist die Kraft $FA_1$ auf der Arbeitsseite. Auf der Meßseite 16 erzeugt dafür die Gewichtskraft $G_1$ des Belastungsgewichtes $M_1$ den hydraulischen Druck pM1. Die Differenzdruck-Kompensationskupplung befindet sich in der Stellung nach Fig. 2b. Auf der Arbeitsseite 18 ist, über das Differenzdrucksignal $\Delta p = 0$ geregelt, der Druck pA1 eingestellt, der also gleich pM1 ist.

Zur Erzeugung der nächsten Kraft $FA_2$ auf der Arbeitsseite 18 wird - unter Beibehaltung der Gewichtskraft $G_1$ auf der Meßseite 16 - die Arbeitsseite 18 über das Differenzdrucksignal $\Delta p = D$, bekannt bzw. berechenbar aus der vorstehend beschriebenen Kalibrierung des Differenzdrucksignals $\Delta p$ des Differenzdruckgebers 27, auf den Druck pA2 angefahren, der für die Erzeugung der Kraft $FA_2$ notwendig ist, und der Arbeitsdruck auf den Wert pA2 eingefroren. Jetzt wird die Meßseite 16 nach Wechsel der Belastungsgewichte von $M_1$ auf $M_2$ mit der Gewichtskraft $G_2$ in ein hydraulisches Gleichgewicht gebracht. Der Druck auf der Meßseite steigt auf den Wert pM2. Das gemessene Differenzdrucksignal $\Delta p$ müßte Null sein oder nahe bei Null liegen.

Zur genauen Einstellung des Arbeitsdruckes werden die Druckaufnehmer 29, 30 und damit das Differenzdrucksignal anschließend unter dem genauen Druck pM2 kalibriert. Hierzu wird die Stellung nach Fig. 2c angefahren. Beide Druckaufnehmer 29, 30 liegen auch körperlich am gleichen Druck pM2. Geringfügige Abweichungen des Differenzdrucksignals von Null werden elektrisch abgeglichen. Anschließend wird wieder die Stellung nach Fig. 2b angefahren, und die Arbeitsseite auf ein Differenzdrucksignal Null geregelt. Auf der Arbeitsseite liegt jetzt die Kraft $FA_2$ an, die mit Hilfe der unmittelbar vorher abgeglichenen Differenzdruck-Kompensationskupplung und dem Übersetzungsverhältnis rückführbar auf die Gewichtskraft $G_2$ ist. Da die Meß- und Arbeitsseiten hydraulisch entkoppelt sind, sind Regelschwingungen minimiert. Die weiteren Kraftstufen werden entsprechend dem vorbeschriebenen Vorgang eingestellt.

Bei der bekannten Belastungsmaschine mit hydraulischer Übersetzung erfolgt die Regelung der Lecköhzufuhr mit Servoventilen, gesteuert über einen Wegaufnehmer, der jede Bewegung des Meßkolbens im Zylinder feststellt (vgl. Fig. 1). Das heißt, jede gleichmäßige, unbeschleunigte Bewegung des Meßkolbens, die noch keine störende Druckänderung hervorruft, gibt dennoch über den Wegaufnehmer ein Signal an die Servoventile zur Volumenkorrektur. Hierdurch wird Öl in die Verbindungsleitung zwischen Meß- und Arbeitsseite nachgefördert. Dies bewirkt eine Störung im dynamischen Gleichgewicht, wodurch eine erneute Störung, bzw. Bewegung an der Meßseite hervorgerufen wird. Dadurch entstehen Schwingungen, die nur aufwendig zu eliminieren sind.

Wird demgegenüber das System mittels der Differenzdruck-Kompensationskupplung entkoppelt, rufen für die Krafterzeugung nicht störende, gleichmäßige und unbeschleunigte Bewegungen des Meßkolbens 2 auch keine Druckänderungen hervor. Das Differenzdrucksignal ändert sich nicht, und die Stellglieder 17, 19, speziell Servoventile, können keine störenden Aktionen hervorrufen. Da die Druckaufnehmer 29, 30 außerdem nicht im dynamischen Fluß des Öles, sondern in ruhenden Ölabzweigleitungen liegen, die zusätzlich als Puffer wirken, werden Druckschwingungen der Stellglieder 17, 19 und Pumpe 11 überhaupt nicht, oder nur stark abgeschwächt, wahrgenommen. Insgesamt ist das Regelverhalten hiermit wesentlich besser und einfacher.

## Funktion I b (Fig. 4)

Die Funktion I b unterscheidet sich von der Funktion I a dadurch, daß nach Abschluß aller Abgleiche auch noch die Stellung der Absperrorgane 22, 23, 24 nach Fig. 2d angefahren werden kann. Hierbei besteht eine direkte hydraulische Kopplung über die Verbindungsleitung 4 zwischen Meß- und Arbeitsseite. Die Leckölverluste auf der Arbeitsseite 18 werden über den Wegaufnehmer 9 der Meßseite 16 mit geregelt. In der Funktion I b ist damit auch die klassische Krafterzeugung einer Belastungsmaschine mit direkter hydraulischer Übersetzung möglich.

## Funktion II (Fig. 4)

Die Funktion II ermöglicht die Erzeugung von Zwischenkraftstufen, die auf der Meßseite 16 nicht durch Belastungsgewichte $M_i$ realisierbar sind. Für den gesamten Meßbereich sind z.B. n, sinnvoll z.B. zehn, geeignet über den Meßbereich verteilte Belastungsgewichte $M_i$ vorhanden. In Fig. 4 entsprechen $FA_2$ und $FA_3$ benachbarten Kraftstufen, die über Gewichtskräfte $G_2$ bzw. $G_3$ nach Funktion I a mit Belastungsgewichten $M_2$, $M_3$ erzeugt werden können. Ausgangspunkt ist die Kraftstufe $FA_2$ und das Soll-Differenzdrucksignal $\Delta p$ = Null. Zur Erzeugung der Zwischenkraftstufen $F_{22}$ bis $F_{28}$ bleibt die Differenzdruck-Kompensationskupplung unverändert in der Stellung nach Fig. 2b. Auf der Meßseite liegt, hervorgerufen durch die Gewichtskraft $G_2$ eines Belastungsgewichtes $M_2$, unverändert der Druck pM2 an, der zum Erzeugen der Kraft $FA_2$ notwendig war. Der Druck auf der Arbeitsseite 18 wird nun erhöht, und zwar durch Vorgabe eines Soll-Differenzdrucksignales d2 - bekannt aus der oben beschriebenen Bestimmung der Empfindlichkeit -, das der gewünschten Zwischenkraftstufe $F_{22}$ entspricht. Da kein Wechsel der Belastungsgewichte $M_i$ notwendig ist, kann diese Kraftstufe sehr schnell angefahren werden. Zum Erzeugen der weiteren Zwischenstufen $F_{24}$, $F_{26}$, $F_{28}$ werden die Soll-Differenzdrucksignale d4, d6, d8 herangezogen. Anschließend wird die Kraftstufe $FA_3$ erreicht, die sich wieder mit Hilfe der Gewichtskraft $G_3$ eines Belastungsgewichtes $M_3$ realisieren läßt, wie bei Funktion I a beschrieben worden ist.

## Funktion III (Fig. 4)

Die Funktion III entspricht prinzipiell der Funktion II. Es wird hier nur dargestellt, daß die Zahl der Zwischenkraftstufen, z.B. zwischen $FA_3$ und $FA_4$, beliebig hoch sein kann, d.h., daß die gewünschte Zwischenkraftstufe kontinuierlich durch kontinuierliche Steigerung des Soll-Differenzdruckes $\Delta p$ erhöht werden kann.

Die beschriebene Belastungsmaschine mit Differenzdruck-Kompensationskupplung ermöglicht eine hochgenaue Krafterzeugung, die unabhängig von weiteren Belastungsmaschinen selbstkalibrierend auf Basiseinheiten, d.h. Meßgewichte, rückführbar ist. Weiterhin sind schwingungsarme und schnelle Belastungsänderungen möglich. Wesentlich ist, daß nur eine geringe Anzahl von Belastungsgewichten $M_i$ benötigtwird. Die Meßseite kann deshalb z.B. eine klassische Druckwaage mit nur zehn Belastungsgewichten bzw. Druckstufen sein. Andererseits kann die Meßseite auch als Direktbelastungsmaschine ausgebildet sein. Die hierfür notwendigen Belastungsgewichte reichen für die Erzeugung beliebiger Kraftstufen auf der Arbeitsseite vollkommen aus; zusätzliche Belastungsgewichte sind nicht erforderlich.

| Bezugszeichenliste | | | |
|---|---|---|---|
| 1 | Umkehrgehänge | 30 | Druckaufnehmer |
| 2 | Meßkolben | 31 | Schaltungspunkt |
| 3 | Meßzylinder | 32 | Leistungsverstärker |
| 4 | Verbindungsleitung | 33 | Idealkennlinie |
| 5 | Arbeitskolben | 34 | Idealkennlinie |
| 6 | Arbeitszylinder | 35 | Hysteresekennlinie |
| 7 | Kraftaufnehmer | 36 | Hysteresekennlinie |
| 8 | Leckölzufuhr | 37 | Druckdifferenzsignal |
| 9 | Wegaufnehmer | | |
| 10 | Stellglied | M | Belastungsgewicht |
| 11 | Druckquelle | G | Gewichtskraft |
| 12 | Wegaufnehmer | p | Druck |
| 13 | Ölzufuhrleitung | A1 | Arbeitsfläche von 2 |
| 14 | Stellglied | A2 | Arbeitsfläche von 3 |
| 15 | Schalter | FM | Kraft auf der Meßseite 16 |
| 16 | Meßseite | FA | Kraft auf der Meßseite 18 |
| 17 | Stellglied | pM | Meßdruck |
| 18 | Arbeitsseite | pA | Arbeitsdruck |
| 19 | Stellglied | $\Delta$p | Druckdifferenz pA - pM |
| 20 | Druckaufnehmer | | |
| 21 | Regler | Ia | Arbeitsfunktion |
| 22 | Absperrorgan | Ib | Arbeitsfunktion |
| 23 | Absperrorgan | II | Arbeitsfunktion |
| 24 | Absperrorgan | III | Arbeitsfunktion |
| 25 | Eingang | | |
| 26 | Eingang | | |
| 27 | Differenzdruckgeber | | |
| 28 | Umschalter | | |
| 29 | Druckaufnehmer | | |

## Patentansprüche

**1.** Belastungsmaschine mit hydraulischer Kraftübersetzung zur Kalibrierung von Kraftaufnehmern (7), bei welcher ein in einem Arbeitszylinder (6) aufgenommener Arbeitskolben (5) mit einem Arbeitsdruck (pA) beaufschlagt wird, der von einem an einer hydraulischen Meßseite (16) jeweils vorgegebenen Meßdruck (pM) abhängig ist, wobei im Arbeitszylinder (6) auftretende Leckölverluste über eine geregelte Ölzufuhr (8) ausgeglichen werden, dadurch gekennzeichnet, daß die Meßseite (16) und der Arbeitszylinder (6) während der Kalibrierung hydraulisch voneinander entkoppelt sind, daß die Druckdifferenz($\Delta$p ) zwischen Meßdruck (pM) und Arbeitsdruck (pA) mittels eines Differenzdruckgebers (27) ermittelt wird und daß der Differenzdruckgeber (27) über ein dem Arbeitszylinder (6) gesondert zugeordnetes Stellglied (19) den Arbeitsdruck (pA) auf Einhaltung eines vorgegebenen Soll-Differenzdruckes ($\Delta$p$_i$) regelt.

**2.** Belastungsmaschine nach Anspruch 1, dadurch gekennzeichnet, daß die Meßseite (16) einen von einem Meßzylinder (3) aufgenommenen Meßkolben (2) aufweist, der durch Belastungsgewichte (M) belastbar ist und der über ein in der Ölzufuhr (8) liegendes, dem Meßzylinder (3) gesondert zugeordnetes Stellglied (17) mit einem die Belastung des Meßkolbens (2) kompensierenden Druck beaufschlagt wird derart, daß der Meßkolben (2) eine bestimmte Grundstellung im Meßzylinder (3) einnimmt, wobei die Grundstellung des Meßkolbens (2) durch einen sein Stellglied (17) steuernden Wegaufnehmer (9) geregelt wird.

**3.** Belastungsmaschine nach den Ansprüchen 1 und 2, dadurch gekennzeichnet, daß die Nullstellung des Arbeitskolbens (5) im Arbeitszylinder (6) durch einen sein Stellglied (19) steuernden Wegaufnehmer (12) eingeregelt wird und daß das Stellglied (19) von einer Regelung durch seinen Wegaufnehmer (12) auf eine Regelung durch den Differenzdruckgeber (27) umschaltbar ist.

4. Belastungsmaschine nach den Ansprüchen 1 bis 3, dadurch gekennzeichnet, daß der Meßzylinder (3) und der Arbeitszylinder (6) über eine Verbindungsleitung (4) hydraulisch miteinander koppelbar sind, daß in der Verbindungsleitung (4) drei jeweils für sich betätigbare Absperrorgane (22, 23, 24) hintereinander angeordnet sind und daß die beiden Druckeingänge (25, 26) des Differenzdruckgebers (27) beidseits des mittleren Absperrorgans (23) an die Verbindungsleitung (4) angeschlossen sind.

5. Belastungsmaschine nach den Ansprüchen 1 bis 4, dadurch gekennzeichnet, daß der Differenzdruckgeber (27) zwei möglichst identische Druckaufnehmer (29, 30) aufweist, die entweder unmittelbar in Differenzschaltung angeordnet sind oder aus deren Ausgangssignalen erst nachfolgend ein Differenzsignal gebildet wird.

6. Belastungsmaschine nach Anspruch 5, dadurch gekennzeichnet, daß die Druckaufnehmer (29, 30) mit Dehnungsmeßstreifen-Brücken versehene DMS-Druckaufnehmer sind.

7. Belastungsmaschine nach Anspruch 6, dadurch gekennzeichnet, daß die DMS-Brücken in direkter Differenzschaltung betrieben werden und daß deren elektrisches Signal einem Verstärker zugeführt wird, der elektrische Steuersignale für das Stellglied (19) erzeugt.

8. Belastungsmaschine nach Anspruch 6, dadurch gekennzeichnet, daß die Ausgangssginale der DMS-Brücken einem Differenzverstärker zugeführt werden, dessen Differenzsignal einem Leistungsverstärker (32) zugeführt wird, der elektrische Steuersignale für das Stellglied (19) erzeugt.

9. Belastungsmaschine nach Anspruch 5, dadurch gekennzeichnet, daß zwei Druckaufnehmer (29, 30) mit im wesentlichen gleichen Kennlinien für Hysterese, Empfindlichkeit und Kriechverhalten gegenüber Druckänderungen verwendet sind und daß evtl. Abweichungen in den Kennlinien durch elektrische Kompensationsschaltungen ausgleichbar sind.

10. Belastungsmaschine nach einem oder mehreren der vorangegangenen Ansprüche, dadurch gekennzeichnet, daß die Ölzufuhr (8) zu den beiden Stellgliedern (17, 19) von einer gemeinsamen Druckquelle (11) aus erfolgt.

11. Belastungsmaschine nach Anspruch 10, dadurch gekennzeichnet, daß der Vordruck für die Ölzufuhr von einer Radialkolbenpumpe geliefert wird.

12. Belastungsmaschine nach Anspruch 10, dadurch gekennzeichnet, daß der Vordruck für die Ölzufuhr über eine geregelte Axialkolbenpumpe (11) mit zugehörigem Druckaufnehmer (20) und Regler (21) abhängig von der jeweiligen Kraftstufe einstellbar ist.

13. Belastungsmaschine nach einem oder mehreren der Ansprüche 1, 3 bis 12, dadurch gekennzeichnet, daß für die Meßseite (16) eine Druckwaage verwendet ist.

_Fig.1_

_Fig.3_

*Fig.2*

*Fig.2a*

*Fig.2c*

*Fig.2b*

*Fig.2d*

Fig.4c

Fig.4b

Fig.4a

Fig.4

Europäisches
Patentamt

Nummer der Anmeldung

EP   92 11 4985

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 403 677 (A. M. ERICHSEN GMBH) 27. Dezember 1990 * Zusammenfassung; Abbildung 1 * ----- | 1 | G01L25/00 |

| | | | RECHERCHIERTE SACHGEBIETE (Int. Cl.5 ) |
|---|---|---|---|
| | | | G01L G01G |

Der vorliegende Recherchenbericht wurde für alle Patentansprüche erstellt

| Recherchenort | Abschlußdatum der Recherche | Prüfer |
|---|---|---|
| DEN HAAG | 06 MAI 1993 | ZAFIROPOULOS N. |

EPO FORM 1503 03.82 (P0403)